# EUROPÄISCHE PATENTSCHRIFT

(11) **EP 3 898 056 B1**
(45) Veröffentlichungstag und Bekanntmachung des Hinweises auf die Patenterteilung: **15.11.2023**
(21) Anmeldenummer: 19809484.9
(22) Anmeldetag: 29.11.2019
(51) Int. Cl.: B23K 9/20, B23K 11/00

(54) **SCHWEISSVORRICHTUNG**
WELDING DEVICE
DISPOSITIF DE SOUDAGE

(30) Priorität: 19.12.2018 EP 18213851
(43) Veröffentlichungstag der Anmeldung: 27.10.2021
(73) Patentinhaber: Hilti Aktiengesellschaft, 9494 Schaan (LI)
(72) Erfinder: WOLFSGRUBER, Stefan, 4643 Pettenbach (AT); DÖRNER, Philip, 4643 Pettenbach (AT); STARZENGRUBER, Andreas, 4643 Pettenbach (AT); POPP, Uwe, 9443 Widnau (CH); BERTSCH, Klaus, 6820 Frastanz (AT)
(74) Vertreter: Hilti Aktiengesellschaft Corporate Intellectual Property
(86) Internationale Anmeldenummer: PCT/EP2019/083010
(87) Internationale Veröffentlichungsnummer: WO 2020/126404

(56) Entgegenhaltungen:
- CN-U- 208 132 864
- DE-U1-202016 100 923

## Beschreibung

### Technisches Gebiet

Die Erfindung betrifft allgemein eine Vorrichtung zur Befestigung eines Bolzens an einem Untergrund sowie einen derartigen Bolzen.

### Stand der Technik

Es sind etliche Vorrichtungen und Verfahren bekannt, mit denen verschiedene Bolzen in unterschiedlichen Anwendungsfällen an einem Untergrund befestigt werden. Beispielsweise wird ein Bolzen mit dem Untergrund in Kontakt gebracht und mit elektrischem Strom beaufschlagt. Sobald der elektrische Strom zwischen dem Bolzen und dem Untergrund fliesst, wird der Bolzen unter Ausbildung eines Lichtbogens von dem Untergrund abgehoben. Aufgrund der freiwerdenden Energie verflüssigt sich teilweise das Material des Bolzens und des Untergrunds. Anschliessend wird der Bolzen in das verflüssigte Material eingetaucht, bevor dieses Material erkaltet und fest wird. Der Bolzen ist schliesslich stoffschlüssig mit dem Untergrund verbunden.

Um die notwendige Energie für die Verflüssigung des Materials des Bolzens und des Untergrunds in ausreichend kurzer Zeit zur Verfügung zu stellen, sind Vorrichtungen bekannt, welche einen elektrischen Strom mit sehr hoher Stromstärke erzeugen und über ein entsprechend dimensioniertes elektrisches Kabel dem Bolzen zuführen. Um ein Oxidieren des verflüssigten Materials zu vermeiden, ist beispielsweise aus der DE 20 2016 100 923 U1 (Grundlage für den Oberbegriff des Anspruchs 1) bekannt, die Kontaktstelle zwischen dem Bolzen und dem Untergrund mit einem Inertgas zu spülen. Je nachdem, wie gross eine dafür vorgesehene Schutzgasglocke ist, ist ein Auffinden der gewünschten Schweissstelle schwierig.

Bei Anwendungen beispielsweise im Gebäude- oder Schiffsbau werden Bolzen in verschiedenen Grössen mit einem Gewinde verwendet, an welches ein Gegenstand geschraubt wird, um den Gegenstand an dem Untergrund zu befestigen. Einige Parameter des Befestigungsverfahrens wie beispielsweise die Dauer und die elektrische Leistung des elektrischen Stroms sind von einem Anwender an der Vorrichtung einzustellen und an den verwendeten Bolzen anzupassen. Mittels einer Sichtprüfung beurteilt der Anwender schliesslich die Qualität der Verbindung zwischen dem Bolzen und dem Untergrund. Die Verbindungsqualität hängt damit auch von der Erfahrung und den Fähigkeiten des Anwenders ab.

### Darstellung der Erfindung

Aufgabe der Erfindung ist es, eine Vorrichtung zur Verfügung zu stellen, mit welchem eine Befestigung eines Bolzens an einem Untergrund vereinfacht und/oder verbessert wird.

Gegenstand dieser Anmeldung ist eine Vorrichtung zum Schweissen eines Schweissbolzens an eine vorgegebene Stelle eines Untergrunds, mit einem Bolzenhalter, mit einer Schutzgasglocke, welche unter Bildung eines Spaltes zwischen dem Bolzenhalter und der Schutzgasglocke den Bolzenhalter umgibt, und mit einer Projektionseinrichtung, welche dafür vorgesehen ist, ein visuelles Muster durch den Spalt hindurch auf den Untergrund zu projizieren. Dadurch wird ein Auffinden der vorgegebenen Stelle auch mit vorhandener Schutzgasglocke erleichtert.

Eine vorteilhafte Ausführungsform ist dadurch gekennzeichnet, dass die Projektionseinrichtung eine Lichtquelle umfasst. Bevorzugt umfasst die Lichtquelle eine lichtemittierende Diode. Ebenso bevorzugt umfasst die Projektionseinrichtung mehrere Lichtquellen, welche besonders bevorzugt gleichmässig um den Bolzenhalter angeordnet sind.

Eine vorteilhafte Ausführungsform ist dadurch gekennzeichnet, dass die Projektionseinrichtung an der Schutzgasglocke angebracht ist. Bevorzugt ist die Projektionseinrichtung an der Schutzgasglocke befestigt. Eine alternative Ausführungsform ist dadurch gekennzeichnet, dass die Projektionseinrichtung an dem Bolzenhalter angebracht ist. Bevorzugt ist die Projektionseinrichtung an dem Bolzenhalter befestigt. Eine weitere alternative Ausführungsform ist dadurch gekennzeichnet, dass die Projektionseinrichtung an einem Gehäuse der Vorrichtung angebracht ist. Bevorzugt ist die Projektionseinrichtung an dem Gehäuse befestigt.

Eine vorteilhafte Ausführungsform ist dadurch gekennzeichnet, dass die Schutzgasglocke einen Lichtdurchlass aufweist, durch welchen hindurch das visuelle Muster projizierbar ist. Eine alternative Ausführungsform ist dadurch gekennzeichnet, dass der Bolzenhalter einen Lichtdurchlass aufweist, durch welchen hindurch das visuelle Muster projizierbar ist. Eine weitere alternative Ausführungsform ist dadurch gekennzeichnet, dass die Vorrichtung ein Gehäuse aufweist, welches einen Lichtdurchlass aufweist, durch welchen hindurch das visuelle Muster projizierbar ist.

Eine vorteilhafte Ausführungsform ist dadurch gekennzeichnet, dass das visuelle Muster einen Lichtpunkt umfasst. Eine weitere vorteilhafte Ausführungsform ist dadurch gekennzeichnet, dass das visuelle Muster eine Hilfslinie umfasst. Eine weitere vorteilhafte Ausführungsform ist dadurch gekennzeichnet, dass das visuelle Muster symmetrisch um die vorgegebene Stelle angeordnet ist, wenn ein von dem Bolzenhalter gehaltener Bolzen an der vorgegebenen Stelle angeordnet ist.

Bei einer vorteilhaften Ausführungsform umfasst die Vorrichtung ein Schweissstrom-Kontaktelement zur Beaufschlagung des Schweissbolzens mit einem Schweissstrom, um ein Material des Schweissbolzens und/oder des Untergrunds teilweise zu verflüssigen und/oder eine Bolzenabhubeinrichtung zum Abheben des Schweissbolzens von dem Untergrund unter Beibehaltung des fliessenden Schweissstroms zwischen dem Schweissbolzen und dem Untergrund und/oder eine Bolzeneintaucheinrichtung zum Eintauchen des Schweissbolzens in das verflüssigte Material des Schweissbolzens und/oder des Untergrundes, wenn der Schweissbolzen und/oder der Untergrund aufgrund des Schweissstroms teilweise verflüssigt ist.

### Ausführungsbeispiele

Die Erfindung wird nachstehend anhand von Ausführungsbeispielen unter Bezugnahme auf die Zeichnungen näher erläutert. Es zeigen:
- Fig. 1: schematisch eine Schweissvorrichtung,
- Fig. 2: schematisch eine Schweisspistole und
- Fig. 3: eine Schweisspistole in einem Längsschnitt.

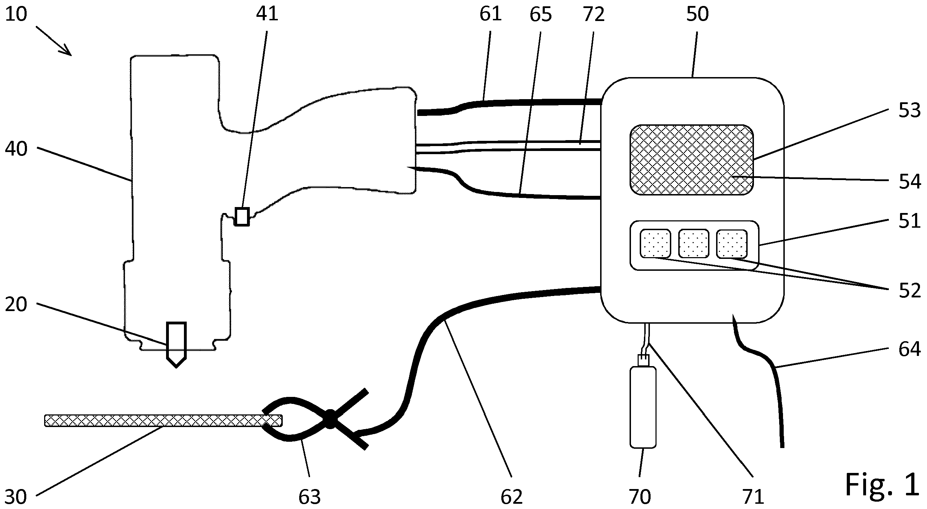

In Fig. 1 ist eine Schweissvorrichtung 10 zum Schweissen eines Schweissbolzens 20 an einen Untergrund 30 schematisch dargestellt. Ein Material des Schweissbolzens 20 und ein Material des Untergrunds 30 sind elektrisch leitfähig, insbesondere metallisch. Die Schweissvorrichtung 10 umfasst eine Schweisspistole 40 mit einem als Tastschalter ausgebildeten Auslöseschalter 41, ein Schweissgerät 50, ein erstes elektrisches Kabel 61, ein zweites elektrisches Kabel 62 mit einer Anschlussklemme 63, ein beispielsweise als Netzkabel ausgebildetes elektrisches Versorgungskabel 64, eine elektrische Kommunikationsleitung 65, ein als Gasflasche ausgebildetes Gasreservoir 70, eine schlauchförmige Gasversorgungsleitung 71 und einen Gasschlauch 72.

Das erste Kabel 61 dient einer Versorgung des Schweissbolzens 20 mit elektrischem Strom durch das Schweissgerät 50. Das zweite Kabel 62 dient einer elektrischen Verbindung des Untergrunds 30 mit dem Schweissgerät 50, wenn die Anschlussklemme 63 an den Untergrund 30 geklemmt ist. Bei Berührung des Schweissbolzens 20 mit dem Untergrund 30 schliesst sich ein Stromkreis, so dass der Schweissbolzen 20 von dem Schweissgerät 50 mit Schweissstrom beaufschlagbar ist, welcher beispielsweise als Gleichstrom oder Wechselstrom ausgebildet ist. Die Schweisspistole 40 umfasst zu diesem Zweck ein in Fig. 1 nicht gezeigtes Schweissstrom-Kontaktelement. Das Schweissgerät 50 umfasst eine nicht gezeigte Einrichtung zur Konvertierung von elektrischem Strom aus dem Versorgungskabel 64 in Schweissstrom, welche beispielsweise einen elektrischen Kondensator, einen Thyristor, einen Bipolar-Transistor mit isolierter Gate-Elektrode oder andere leistungselektronische Bauelemente sowie ein zugehöriges Steuergerät mit einem Mikroprozessor umfasst, um den Schweissstrom mit gewünschter Spannung und Stromstärke bereitzustellen.

Die Gasversorgungsleitung 71 und der Gasschlauch 72 dienen einer Versorgung eines Kontaktbereichs zwischen dem Schweissbolzen 20 und dem Untergrund 30 mit einem Schutzgas aus dem Gasreservoir 70, um den Kontaktbereich während eines Schweissvorgangs vor einer Oxidation durch Sauerstoff einer Umgebung zu schützen. Zur Steuerung eines Gasflusses zu dem Kontaktbereich umfasst das Gasreservoir 70, die Gasversorgungsleitung 71, das Schweissgerät 50, der Gasschlauch 72 oder die Schweisspistole 40 ein nicht gezeigtes, insbesondere regelbares Ventil auf.

Das Schweissgerät 50 weist eine Eingabeeinrichtung 51 mit Betätigungselementen 52 sowie eine Ausgabeeinrichtung 53 mit einem visuellen Anzeigeelement 54 und einer drahtlosen Übertragungseinheit auf. Die Eingabeeinrichtung 51 dient der Eingabe von Parametern eines mit der Schweissvorrichtung 10 durchzuführenden Schweissverfahrens, wie beispielsweise der elektrischen Spannung, Stromstärke, Leistung und zeitliche Dauer des Schweissstroms, Position und Geschwindigkeit des Bolzens und so weiter, durch einen Anwender der Schweissvorrichtung 10. Die Ausgabeeinrichtung 53 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweissvorrichtung 10, insbesondere der Schweisspistole 40, an den Anwender.

Die Kommunikationsleitung 65 dient einer Kommunikation zwischen der Schweisspistole 40, insbesondere einer in Fig. 1 nicht gezeigten Steuereinrichtung der Schweisspistole 40, und dem Schweissgerät 50, insbesondere dem Steuergerät und/oder der Eingabeeinrichtung 51 und/oder der Ausgabeeinrichtung 53. Durch diese Kommunikation wird beispielsweise ein Austausch von Informationen über die Parameter eines Schweissvorgangs bewerkstelligt, um beispielsweise eine Synchronisation des Schweissstroms mit einer Bewegung des Schweissbolzens 20 zu erreichen oder zu erleichtern. Bei nicht gezeigten Ausführungsbeispielen geschieht die Kommunikation zwischen der Schweisspistole und dem Schweissgerät drahtlos, per Funk oder mittels des ersten elektrischen Kabels, welches den Schweissstrom führt.

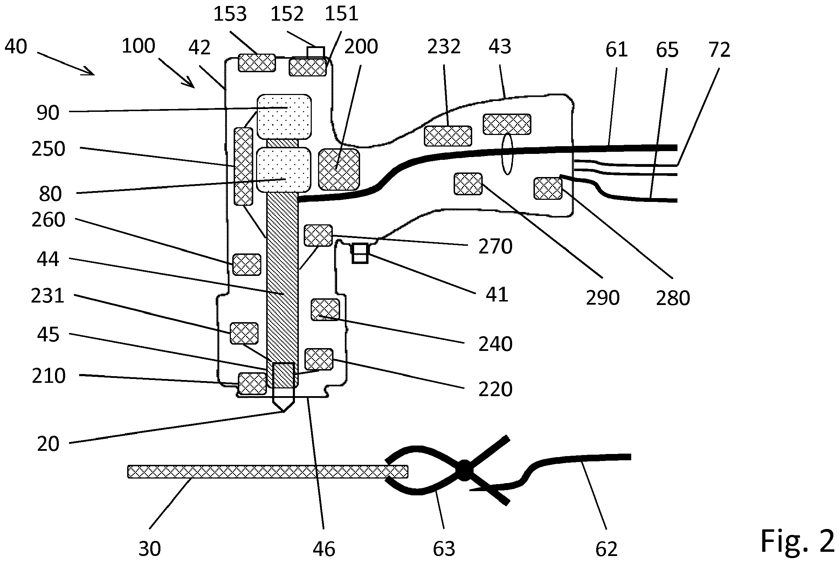

In Fig. 2 ist die Schweisspistole 40 mit dem Schweissbolzen 20 zur Befestigung an dem Untergrund 30 detaillierter dargestellt. Die Schweisspistole 40 weist ein Gehäuse 42 mit einer Mündung 46 auf, von welchem ein Handgriff 43 mit dem Auslöseschalter 41 abragt. Ebenfalls dargestellt sind das erste elektrische Kabel 61, das zweite elektrische Kabel 62 mit der an den Untergrund 30 geklemmten Anschlussklemme 63, die elektrische Kommunikationsleitung 65 und der Gasschlauch 72.

Die Schweisspistole 40 weist ferner einen Bolzenhalter 44 auf, an welchem der Schweissbolzen 20 während eines Schweissvorgangs gehalten ist. Hierzu umfasst der Bolzenhalter beispielsweise zwei, drei, vier oder mehr nicht im einzelnen gezeigte federnde Arme, zwischen die der Schweissbolzen 20 eingesteckt und mittels Klemmsitz gehalten wird. Die Schweisspistole 40 weist ferner ein Schweissstrom-Kontaktelement 45 zur Beaufschlagung des Schweissbolzens 20 mit einem Schweissstrom auf, welches in den Bolzenhalter 44 integriert ist, beispielsweise in Form eines oder mehrerer der federnden Arme.

Die Schweisspistole 40 weist ferner eine Steuereinrichtung 200 zum Steuern der verschiedenen Komponenten und Einrichtungen der Schweisspistole und des Schweissgeräts 50 auf. Die Steuereinrichtung 200 ist zum Steuern eines oder mehrerer Parameter des Schweissvorgangs vorgesehen. Die Steuereinrichtung 200 umfasst dazu verschiedene elektronische Bauteile, wie beispielsweise einen oder mehrere Mikroprozessoren, einen oder mehrere temporäre oder dauerhafte Datenspeicher und dergleichen, auf.

Die Schweisspistole 40 weist ferner eine als ein erster Hubmagnet ausgebildete Bolzenabhubeinrichtung 80 auf, welche den Bolzenhalter 44 mit einer Kraft von der Mündung 46 weg nach hinten (in Fig. 2 nach oben) beaufschlagt, wenn die Bolzenabhubeinrichtung 80 aktiviert ist. Über eine nicht gezeigte Signalleitung kommuniziert die Steuereinrichtung 200 mit der Bolzenabhubeinrichtung 80, um die Bolzenabhubeinrichtung 80 zu steuern, insbesondere zu aktivieren und zu deaktivieren.

Die Schweisspistole 40 weist ferner eine als ein zweiter Hubmagnet ausgebildete Bolzeneintaucheinrichtung 90 auf, welche den Bolzenhalter 44 mit einer Kraft zu der Mündung 46 hin nach vorne (in Fig. 2 nach unten) beaufschlagt, wenn die Bolzeneintaucheinrichtung 90 aktiviert ist. Über eine nicht gezeigte Signalleitung kommuniziert die Steuereinrichtung 200 mit der Bolzeneintaucheinrichtung 90, um die Bolzeneintaucheinrichtung 90 zu steuern, insbesondere zu aktivieren und zu deaktivieren. Bei einem nicht gezeigten Ausführungsbeispiel ist die Bolzeneintaucheinrichtung als ein Federelement ausgebildet, welches gespannt wird, wenn der Bolzenhalter von der Bolzenabhubeinrichtung nach hinten bewegt wird, und welches den Bolzenhalter nach vorne bewegt, sobald die Bolzenabhubeinrichtung deaktiviert wird.

Die Schweisspistole 40 weist ferner eine Beeinflussungseinrichtung 100 zur Beeinflussung der von der Bolzeneintaucheinrichtung 90 bewirkten Geschwindigkeit des Schweissbolzens auf. Die Beeinflussungseinrichtung 100 umfasst die als der erste Hubmagnet ausgebildete Bolzenabhubeinrichtung 80 als einen ersten Aktor und die als der zweite Hubmagnet ausgebildete Bolzeneintaucheinrichtung 90 als einen zweiten Aktor. In diesem Fall wirkt der zweite Aktor gegenüber dem ersten Aktor in entgegengesetzter Richtung. Bei einem nicht gezeigten Ausführungsbeispiel wirkt der zweite Aktor in der gleichen Richtung wie der erste Aktor. In beiden Fällen wird die Geschwindigkeit des Schweissbolzens dadurch beeinflusst, dass die Bolzenabhubeinrichtung 80 und die Bolzeneintaucheinrichtung 90 von der Steuereinrichtung 200 abwechselnd und/oder gleichzeitig aktiviert und deaktiviert werden. Dadurch ist es möglich, die von der Bolzeneintaucheinrichtung 90 hervorgerufene Bewegung des Schweissbolzens 20 mehrfach zu verzögern und/oder umzudrehen.

Die Schweisspistole 40 weist ferner eine Detektionseinrichtung 210 zur Erfassung von beim Schweissvorgang erzeugten Emissionen. Die Detektionseinrichtung 210 umfasst beispielsweise einen Vibrationssensor, ein Mikrofon, einen Temperatursensor, einen Strahlungssensor, eine Kamera oder dergleichen für die Erfassung von akustischen, elektrischen, magnetischen und/oder optischen Emissionen. Über eine nicht gezeigte Signalleitung kommuniziert die Steuereinrichtung 200 mit der Detektionseinrichtung 210, um Signale, welche die erfassten Emissionen repräsentieren, zu empfangen und die Steuerung des Schweissvorgangs entsprechend vorzunehmen.

Die Schweisspistole 40 weist ferner eine Identifikationseinrichtung 220 zur Erfassung einer oder mehrerer Bolzeneigenschaften des Schweissbolzens 20 auf. Die Identifikationseinrichtung 220 eignet sich zur Erfassung geometrischer Bolzeneigenschaften wie beispielsweise einer Länge und/oder einer Breite und/oder eines Durchmessers des Schweissbolzens 20. Bei nicht gezeigten Ausführungsbeispielen eignet sich die Identifikationseinrichtung zur Erfassung eines Materials des Schweissbolzens oder eines werkseitig an dem Schweissbolzen angebrachten Identifikationselements des Schweissbolzens. Die Schweisspistole 40 weist ferner Bolzenhalteridentifikationseinrichtung 270, welche dafür vorgesehen ist, ein an dem Bolzenhalter 44 angebrachtes Identifikationselement zu erfassen. Wenn jeder Bolzentyp einem Bolzenhaltertyp zugeordnet ist, ermöglicht dies eine indirekte Erfassung der Bolzeneigenschaften. Beispielsweise eignet sich der Bolzenhalter 44 nur zum Halten von Bolzen eines bestimmten Durchmessers, so dass sich von der Erfassung des Bolzenhalters 44 auf den Durchmesser des Schweissbolzens 20 schliessen lässt. Über eine nicht gezeigte Signalleitung kommuniziert die Steuereinrichtung 200 mit der Identifikationseinrichtung, um Signale, welche die erfassten Bolzeneigenschaften repräsentieren, zu empfangen und die Steuerung des Schweissvorgangs entsprechend vorzunehmen. Bei einem nicht gezeigten Ausführungsbeispiel ist das Identifikationselement an einer Verpackung des Schweissbolzens angebracht und wird beispielsweise per QR-Code oder RFID eingelesen, insbesondere mit Hilfe eines Mobiltelefons oder ähnlichem Gerät.

Die Schweisspistole 40 umfasst ferner eine Spannungserfassungseinrichtung 231 zur Erfassung einer zwischen dem Schweissbolzen 20 und dem Untergrund 30 anliegenden elektrischen Spannung während des Schweissvorgangs und eine Stromstärkeerfassungseinrichtung 232 zur Erfassung einer zwischen dem Schweissbolzen 20 und dem Untergrund 30 fliessenden Stromstärke während des Schweissvorgangs. Die Spannungserfassungseinrichtung 231 umfasst dafür vorzugsweise einen beispielsweise an der Mündung 46 angebrachten Messkontakt zum Abgreifen des elektrischen Potentials des Untergrunds 30. Über eine nicht gezeigte Signalleitung kommuniziert die Steuereinrichtung 200 mit der Spannungserfassungseinrichtung 231 und der Stromstärkeerfassungseinrichtung 232, um Signale, welche die elektrische Spannung beziehungsweise die Stromstärke repräsentieren, zu empfangen, in einem ihrer Datenspeicher zu speichern, und einen oder mehrere Parameter eines nachfolgenden Schweissvorgangs in Abhängigkeit von den von den Erfassungseinrichtungen 231, 232 während eines vorangegangenen Schweissvorgangs erfassten Parametern zu steuern.

Die Schweisspistole 40 umfasst ferner eine Bestimmungseinrichtung 260 zur Bestimmung einer zeitlichen Dauer der Eintauchbewegung und einer Geschwindigkeit des Schweissbolzens während der Eintauchbewegung des Schweissbolzens 20. Zur Bestimmung der Position des Schweissbolzens vor der Abhubbewegung und nach der Eintauchbewegung eignet sich die Positionserfassungseinrichtung 250, und die Steuereinrichtung 200 eignet sich dazu, einen Unterschied zwischen diesen beiden Positionen zu bestimmen und die Qualität der Schweissverbindung zwischen dem Schweissbolzen 20 und dem Untergrund 30 zu beurteilen.

Die Schweisspistole 40 weist ferner eine Eingabeeinrichtung 151 mit einem Betätigungselement 152 sowie eine Ausgabeeinrichtung 153 mit einem visuellen Anzeigeelement und einer drahtlosen Übertragungseinheit auf. Die Eingabeeinrichtung 151 dient der Eingabe von Parametern eines mit der Schweisspistole 40 durchzuführenden Schweissverfahrens, wie beispielsweise der elektrischen Spannung, Stromstärke, Leistung und zeitlichen Dauer des Schweissstroms, Position und Geschwindigkeit des Bolzens und so weiter, durch einen Anwender der Schweisspistole 40. Die Ausgabeeinrichtung 153 dient der Ausgabe von Informationen, wie beispielsweise Informationen über Parameter des Schweissverfahrens, Informationen über erfasste Emissionen des Schweissverfahrens oder andere Grössen, Informationen über eine Güte des Schweissvorgangs, Informationen über Massnahmen zur Verbesserung des Schweissvorgangs, Informationen über erfasste Eigenschaften des Schweissbolzens oder aus den vorgenannten Grössen abgeleitete Informationen, und/oder Empfehlungen oder Anweisungen zur Reinigung und/oder Wartung der Schweisspistole 40 an den Anwender. Über nicht gezeigte Signalleitungen kommuniziert die Steuereinrichtung 200 mit der Eingabeeinrichtung 151 und der Ausgabeeinrichtung 153, um Informationen, welche mittels der Eingabeeinrichtung 151 eingegeben werden, zu empfangen, beziehungsweise Informationen, welche ausgegeben werden sollen, an die Ausgabeeinrichtung 153 zu senden.

Die Schweisspistole 40 weist ferner eine Orientierungserkennungseinrichtung 290 zur Erkennung einer Orientierung der Schweisspistole 40 in Bezug auf die Richtung der Gravitation auf. Die Orientierungserkennungseinrichtung 290 erkennt beispielsweise, ob die Schweisspistole 40 während des Schweissvorgangs nach unten, zur Seite oder nach oben ausgerichtet ist. Die Orientierungserkennungseinrichtung 290 ermittelt die Orientierung der Schweisspistole 40 beispielsweise durch Auswertung der Beschleunigung des Bolzenhalters während einer Hubbewegung oder durch Auswertung eines zeitlichen Verlaufs der elektrischen Spannung des Schweissstroms. Die Information über die Orientierung der Schweisspistole 40 dient einer verbesserten Steuerung der Parameter des Schweissvorgangs.

Als Teil einer Einrichtung zum Auffinden einer für den Schweissbolzen vorgegebenen Schweissstelle umfasst die Schweisspistole 40 ferner eine Erkennungseinrichtung 240 zum Erkennen eines elektrischen Kontaktwiderstands zwischen der Schweisspistole 40, insbesondere der Mündung 46 oder dem Bolzenhalter 44, und dem Untergrund 30 und/oder zwischen dem Schweissbolzen 20 und dem Untergrund 30. Zusätzlich umfasst die Einrichtung zum Auffinden einer für den Schweissbolzen vorgegebenen Schweissstelle eine Positionserfassungseinrichtung 250 zur Erfassung der Position des Schweissbolzens 20 und des Bolzenhalters 44 gegenüber der übrigen Schweisspistole 40, um einen Höhenunterschied zwischen der vorgegebenen Stelle und der übrigen Oberfläche des Untergrunds zu erkennen. Über eine nicht gezeigte Signalleitung kommuniziert die Steuereinrichtung 200 mit der Erkennungseinrichtung 240 und der Positionserfassungseinrichtung 250, um Signale, welche den Kontaktwiderstand beziehungsweise die Position des Schweissbolzens 20 und des Bolzenhalters 44 repräsentieren, zu empfangen und zu verarbeiten.

Als weiteren Teil der Einrichtung zum Auffinden der für den Schweissbolzen 20 vorgegebenen Schweissstelle umfasst die Schweisspistole eine Projektionseinrichtung 280 zur Projektion einer oder mehrerer Hilfslinien auf den Untergrund 30. Die Projektionseinrichtung 280 weist dafür beispielsweise einen Laser auf, welcher die Hilfslinien auf den Untergrund 30 projiziert. Die Hilfslinien zeigen einem Anwender der Schweisspistole 40 die Stelle auf dem Untergrund 30 an, an die der Schweissbolzen 20 bei der jeweiligen Position der Schweisspistole 40 geschweisst wird.

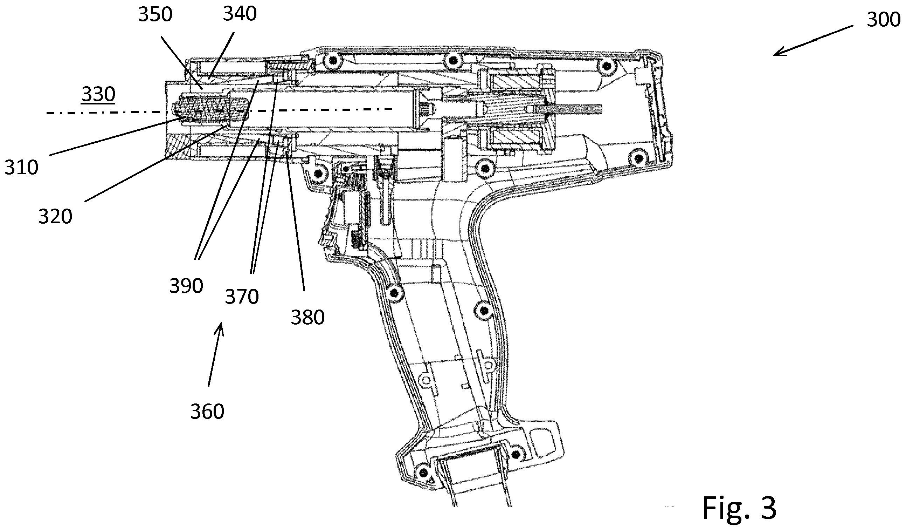

Fig. 3 zeigt eine als Schweisspistole ausgebildete Vorrichtung 300 zum Schweissen eines Schweissbolzens 310 an eine vorgegebene Schweissstelle eines nicht dargestellten Untergrunds. Die Vorrichtung 300 umfasst einen Bolzenhalter 320, an dem der Schweissbolzen 310 während eines Schweissvorgangs gehalten ist, so dass sich der Schweissbolzen 310 entlang einer Schweissachse 330 mit dem Bolzenhalter 320 mitbewegt. Weiterhin umfasst die Vorrichtung 300 eine Schutzgasglocke 340, welche unter Bildung eines Spaltes 350 zwischen dem Bolzenhalter 320 und der Schutzgasglocke 340 den Bolzenhalter um die Schweissachse 330 umlaufend umgibt. Dadurch ist ein Umspülen des Bolzenhalters 320 und des Schweissbolzens 310 mit einem Schutzgas möglich, wobei das Schutzgas durch den Spalt 350 strömt.

Die Vorrichtung 300 umfasst eine Projektionseinrichtung 360, welche mehrere, im vorliegenden Ausführungsbeispiel sechs als lichtemittierende Dioden ausgebildete Lichtquellen 370 umfasst, welche gleichmässig um den Bolzenhalter 320 angeordnet sind. Die Lichtquellen 370 sind mittels einer Platine 380, auf der die Lichtquellen 370 verdrahtet sind, an der Schutzgasglocke 340 befestigt. Die Schutzgasglocke 340 weist Lichtdurchlässe 390 auf, wobei jeweils eine Lichtquelle 370 an oder in einem Lichtdurchlass 390 angeordnet ist. Bei nicht gezeigten Ausführungsbeispielen sind die Lichtquellen und/oder Lichtdurchlässe an dem Bolzenhalter oder einem Gehäuse der Vorrichtung angebracht beziehungsweise vorgesehen.

Die Lichtquellen 370 projizieren ein visuelles Muster durch die Lichtdurchlässe 390 und den Spalt 350 hindurch auf den Untergrund, um ein Auffinden der vorgegebenen Schweissstelle zu erleichtern. Unter Umständen wird das Licht an einer Aussenfläche des Bolzenhalters 320 und/oder einer Innenfläche der Schutzgasglocke 340 reflektiert, bevor es auf den Untergrund trifft. Das visuelle Muster umfasst dabei Lichtpunkte, Hilfslinien oder ein um die Schweissachse 330 symmetrisch aufgebautes Muster wie beispielsweise ein Kreis oder eine Rosette. Insbesondere umfasst das visuelle Muster einen ebenfalls symmetrisch um die Schweissachse 330 gebildeten Schatten des Bolzenhalters 320. Ein Benutzer der Vorrichtung 300 kann den Schweissbolzen 310 leicht an der vorgegebenen Schweissstelle auf dem Untergrund aufsetzen, indem er das auf den Untergrund projizierte Muster symmetrisch um die vorgegebene Schweissstelle ausrichtet.

Die Erfindung wurde anhand von Beispielen einer Vorrichtung und eines Verfahrens zum Schweissen eines Schweissbolzens an einem Untergrund beschrieben.

## Patentansprüche

1. Vorrichtung zum Schweissen eines Schweissbolzens (20) an eine vorgegebene Stelle eines Untergrunds, mit einem Bolzenhalter (44), mit einer Schutzgasglocke (340), welche unter Bildung eines Spaltes (350) zwischen dem Bolzenhalter (44) und der Schutzgasglocke (340) den Bolzenhalter (44) umgibt, **gekennzeichnet durch** eine Projektionseinrichtung (280), welche dafür vorgesehen ist, ein visuelles Muster durch den Spalt (350) hindurch auf den Untergrund zu projizieren.

2. Vorrichtung nach Anspruch 1, wobei die Projektionseinrichtung (280) eine Lichtquelle (370) umfasst.

3. Vorrichtung nach Anspruch 2, wobei die Lichtquelle (370) eine lichtemittierende Diode umfasst.

4. Vorrichtung nach einem der Ansprüche 2 und 3, wobei die Projektionseinrichtung (280) mehrere Lichtquellen (370) umfasst.

5. Vorrichtung nach Anspruch 4, wobei die Lichtquellen (370) gleichmässig um den Bolzenhalter (44) angeordnet sind.

6. Vorrichtung nach einem der vorhergehenden Ansprüche, wobei die Projektionseinrichtung (280) an der Schutzgasglocke (340) angebracht ist, insbesondere befestigt ist.

7. Vorrichtung nach einem der Ansprüche 1 bis 5, wobei die Projektionseinrichtung (280) an dem Bolzenhalter (44) angebracht ist, insbesondere befestigt ist.

8. Vorrichtung nach einem der Ansprüche 1 bis 5, wobei die Vorrichtung ein Gehäuse (42) aufweist, und wobei die Projektionseinrichtung (280) an dem Gehäuse (42) angebracht ist, insbesondere befestigt ist.

9. Vorrichtung nach einem der vorhergehenden Ansprüche, wobei die Schutzgasglocke (340) einen Lichtdurchlass aufweist, durch welchen hindurch das visuelle Muster projizierbar ist.

10. Vorrichtung nach einem der Ansprüche 1 bis 8, wobei der Bolzenhalter (44) einen Lichtdurchlass aufweist, durch welchen hindurch das visuelle Muster projizierbar ist.

11. Vorrichtung nach einem der Ansprüche 1 bis 8, wobei die Vorrichtung ein Gehäuse (42) aufweist, welches einen Lichtdurchlass aufweist, durch welchen hindurch das visuelle Muster projizierbar ist.

12. Vorrichtung nach einem der vorhergehenden Ansprüche, wobei das visuelle Muster einen Lichtpunkt umfasst.

13. Vorrichtung nach einem der vorhergehenden Ansprüche, wobei das visuelle Muster eine Hilfslinie umfasst.

14. Vorrichtung nach einem der vorhergehenden Ansprüche, wobei das visuelle Muster symmetrisch um die vorgegebene Stelle angeordnet ist, wenn ein von dem Bolzenhalter (44) gehaltener Bolzen an der vorgegebenen Stelle angeordnet ist.

15. Vorrichtung nach einem der vorhergehenden Ansprüche, weiterhin umfassend ein Schweissstrom-Kontaktelement zur Beaufschlagung des Schweissbolzens (20) mit einem Schweissstrom, um ein Material des Schweissbolzens (20) und/oder des Untergrunds teilweise zu verflüssigen und/oder eine Bolzenabhubeinrichtung zum Abheben des Schweissbolzens (20) von dem Untergrund unter Beibehaltung des fliessenden Schweissstroms zwischen dem Schweissbolzen (20) und dem Untergrund und/oder eine Bolzeneintaucheinrichtung zum Eintauchen des Schweissbolzens (20) in das verflüssigte Material des Schweissbolzens (20) und/oder des Untergrundes, wenn der Schweissbolzen (20) und/oder der Untergrund aufgrund des Schweissstroms teilweise verflüssigt ist.

## Claims

1. Apparatus for welding a welding stud (20) to a predefined location of an underlying surface, having a stud holder (44) and having a shielding-gas cover (340), which surrounds the stud holder (44) to form a gap (350) between the stud holder (44) and the shielding-gas cover (340), **characterized by** a projection device (280) which is provided to project a visual pattern, through the gap (350), onto the underlying surface.

2. Apparatus according to Claim 1, wherein the projection device (280) comprises a light source (370).

3. Apparatus according to Claim 2, wherein the light source (370) comprises a lightemitting diode.

4. Apparatus according to either of Claims 2 and 3, wherein the projection device (280) comprises a plurality of light sources (370).

5. Apparatus according to Claim 4, wherein the light sources (370) are arranged uniformly around the stud holder (44).

6. Apparatus according to one of the preceding claims, wherein the projection device (280) is fitted, in particular fastened, on the shielding-gas cover (340).

7. Apparatus according to one of Claims 1 to 5, wherein the projection device (280) is fitted, in particular fastened, on the stud holder (44).

8. Apparatus according to one of Claims 1 to 5, wherein the apparatus has a housing (42), and wherein the projection device (280) is fitted, in particular fastened, on the housing (42).

9. Apparatus according to one of the preceding claims, wherein the shielding-gas cover (340) has a light aperture, through which the visual pattern can be projected.

10. Apparatus according to one of Claims 1 to 8, wherein the stud holder (44) has a light aperture, through which the visual pattern can be projected.

11. Apparatus according to one of Claims 1 to 8, wherein the apparatus has a housing (42) which has a light aperture, through which the visual pattern can be projected.

12. Apparatus according to one of the preceding claims, wherein the visual pattern comprises a spot of light.

13. Apparatus according to one of the preceding claims, wherein the visual pattern comprises an auxiliary line.

14. Apparatus according to one of the preceding claims, wherein the visual pattern is arranged symmetrically about the predefined location when a stud retained by the stud holder (44) is arranged at the predefined location.

15. Apparatus according to one of the preceding claims, also comprising a weldingcurrent contact element for applying a welding current to the welding stud (20) in order partially to liquefy a material of the welding stud (20) and/or of the underlying surface, and/or also comprising a stud-lifting device for lifting the welding stud (20) off from the underlying surface, while the flowing welding current is maintained between the welding stud (20) and the underlying surface, and/or also comprising a stud-immersing device for immersing the welding stud (20) into the liquefied material of the welding stud (20) and/or of the underlying surface when the welding stud (20) and/or the underlying surface have/has been partially liquefied on account of the welding current.

## Revendications

1. Dispositif permettant de souder un goujon à souder (20) en un point prédéfini d'un substrat, comportant un support de goujon (44), comportant une enceinte de gaz protecteur (340), laquelle entoure le support de goujon (44) en formant un interstice (350) entre le support de goujon (44) et l'enceinte de gaz protecteur (340), **caractérisé par** un dispositif de projection (280), lequel est prévu pour projeter un motif visuel sur le substrat à travers l'interstice (350).

2. Dispositif selon la revendication 1, dans lequel le dispositif de projection (280) comprend une source de lumière (370).

3. Dispositif selon la revendication 2, dans lequel la source de lumière (370) comprend une diode électroluminescente.

4. Dispositif selon l'une des revendications 2 et 3, dans lequel le dispositif de projection (280) comprend plusieurs sources de lumière (370).

5. Dispositif selon la revendication 4, dans lequel les sources de lumière (370) sont disposées uniformément autour du support de goujon (44).

6. Dispositif selon l'une des revendications précédentes, dans lequel le dispositif de projection (280) est monté sur l'enceinte de gaz protecteur (340), en particulier fixé sur celle-ci.

7. Dispositif selon l'une des revendications 1 à 5, dans lequel le dispositif de projection (280) est monté sur le support de goujon (44), en particulier fixé sur celui-ci.

8. Dispositif selon l'une des revendications 1 à 5, le dispositif présentant un boîtier (42), et le dispositif de projection (280) étant monté sur le boîtier (42), en particulier fixé sur celui-ci.

9. Dispositif selon l'une des revendications précédentes, dans lequel à l'enceinte de gaz protecteur (340) présente un passage pour la lumière, à travers lequel le motif visuel peut être projeté.

10. Dispositif selon l'une des revendications 1 à 8, dans lequel le support de goujon (44) présente un passage pour la lumière, à travers lequel le motif visuel peut être projeté.

11. Dispositif selon l'une des revendications 1 à 8, dans lequel le dispositif présente un boîtier (42), lequel présente un passage pour la lumière, à travers lequel le motif visuel peut être projeté.

12. Dispositif selon l'une des revendications précédentes, dans lequel le motif visuel comprend un point lumineux.

13. Dispositif selon l'une des revendications précédentes, dans lequel le motif visuel comprend une ligne auxiliaire.

14. Dispositif selon l'une des revendications précédentes, dans lequel le motif visuel est disposé symétriquement autour du point prédéfini lorsqu'un goujon retenu par le support de goujon (44) est disposé au point prédéfini.

15. Dispositif selon l'une des revendications précédentes, comprenant en outre un élément de contact de courant de soudage servant à soumettre le goujon à souder (20) à un courant de soudage, afin de liquéfier partiellement une matière du goujon à souder (20) et/ou du substrat et/ou un dispositif de levage de goujon servant à soulever le goujon à souder (20) du substrat en maintenant le courant de soudage circulant entre le goujon à souder (20) et le substrat et/ou un dispositif d'immersion de goujon servant à immerger le goujon à souder (20) dans la matière liquéfiée du goujon à souder (20) et/ou du substrat, lorsque le goujon à souder (20) et/ou le substrat est/sont partiellement liquéfié(s) en raison du courant de soudage.
